# EUROPEAN PATENT SPECIFICATION

(11) **EP 4 397 613 B1**
(45) Date of publication and mention of the grant of the patent: **22.04.2026**
(21) Application number: 24150162.6
(22) Date of filing: 03.01.2024
(51) Int. Cl.: B66B 1/34, B66B 5/00

(54) **METHOD FOR SENSING A FILL LEVEL OF A SPACE**
VERFAHREN ZUR ERFASSUNG EINES FÜLLSTANDES EINES RAUMS
PROCÉDÉ DE DÉTECTION D'UN NIVEAU DE REMPLISSAGE D'UN ESPACE

(30) Priority: 04.01.2023 CN 202310008489
(43) Date of publication of application: 10.07.2024
(73) Proprietor: KONE Corporation, 00330 Helsinki (FI)
(72) Inventor: LU, Yong Qing, Kunshan 215316 (CN); XIAO, Bin, Kunshan 215316 (CN); YE, Tao, Kunshan 215316 (CN); DENG, Qi, Kunshan 215316 (CN); CHANG, Chunwei, Kunshan 215316 (CN)
(74) Representative: Kolster Oy Ab

(56) References cited:
- WO-A1-2012/077863
- US-A1- 2016 368 732
- US-A1- 2018 029 835

## Description

### TECHNICAL FIELD

The disclosure relates to a sensing device and a method for sensing a fill level of a space. The disclosure also relates to an elevator comprising the sensing device.

### BACKGROUND

Usually, in a limited space like an elevator, it is often necessary to determine whether the space is full, so as to control the number of objects (including people or other creatures). A common method for determining the full-loading of the space is to detect the occupancy of the space by detecting the weight of the loads in the space. However, in some cases, the loads weighing device will not trigger a full-loading bypass, as the ground space of this space may be occupied by lighter objects, such as occupants carrying large luggages or strollers.

Therefore, in this case, it is desired to sense the fill level of the space (elevator car) through devices and methods based on a non-weight detection.

US 2016/368732 A1 discloses a method for sensing a fill level of a space. US 2018/029835 A1 discloses a monitoring system of a passenger conveyor.

### SUMMARY

In view of the problems and demands mentioned above, the present disclosure proposes a new technical scheme, which solves the above problems and brings other technical effects by adopting the following technical features.

According to the principle of the present unclaimed disclosure, a device is installed in such a space as the elevator car to detect the fill level of the elevator car. When the car's fill level reaches a predefined threshold, a bypass signal will be triggered, and even though there is a landing call (from outside the car), the elevator will not serve a certain floor, because this may lead to unnecessary stop. In this case, another elevator can be assigned to receive the landing call, thus reducing the travel time of passengers in the elevator and the waiting time for passengers to make the landing call.

Therefore, the present unclaimed disclosure provides a sensor for sensing a fill level of a space, which comprises: a housing, a circuit board, provided in the housing; a camera, connecting to the circuit board; a distance measuring sensor, connecting to the circuit board; wherein the controller is provided on the circuit board and is in communication connection with the camera and the distance measuring sensor to calculate the fill level of the space according to the input from the camera and the distance measuring sensor; wherein the camera and the distance measuring sensor are arranged to be exposed to the space.

The disclosure also provides an elevator, which comprises the aforementioned sensor for sensing the fill level of the elevator car space.

The invention also provides a method for sensing a fill level of a space as stipulated in claim 1.

To sum up, the present invention provides a method for determining the fill level of a space like an elevator car without utilizing the gravity load, and the method can better identify the objects in the space and further calculate the fill level of the space according to the identified images, and can be used as a substitute or a beneficial supplement for gravity load determination.

### BRIEF DESCRIPTION OF DRAWINGS

Figs. 1-2 are schematic views of a sensing device for detecting a fill level of a space according to a preferred embodiment of the present disclosure;
Fig. 3 is a schematic diagram of main steps of a method for sensing a fill level of a space according to a preferred embodiment of the present disclosure;
Fig. 4 is a schematic diagram of a preferred process for calculating the image difference between a real-time ground image and a ground reference image;
Fig. 5A is a schematic diagram of setting markers at characteristic positions on the ground;
Fig. 5B is a schematic diagram of a preferred process of setting and processing markers;
Fig. 6 is a schematic diagram of a preferred process of a binary ground mask and a ground mask shape conforming to the actual shape of the floor;
Fig. 7 is a schematic diagram of a preferred process for obtaining a corrected ground mask image by verification;
Fig. 8 is a schematic diagram of a preferred process of modifying the ground image without markers according to the modified ground mask image to obtain a ground reference image;
Fig. 9 is a ground reference image obtained by the initialization process of the ground reference image according to the preferred embodiment of the present disclosure.

### DETAILED DESCRIPTION

In order to make the purpose, technical solution and advantages of the technical solution of the present disclosure clearer, the technical solution of the embodiment of the present disclosure will be described clearly and completely in the following with the attached drawings of specific embodiments of the present disclosure. Like reference numerals in the drawings represent like components. It should be noted that a described embodiment is a part of the embodiments of the present disclosure, not the whole embodiments. Based on the described embodiments of the present disclosure, all other embodiments obtained by those skilled in the field without creative labor fall into the scope of protection of the present disclosure.

In comparison with the embodiments shown in the attached drawings, feasible embodiments within the protection scope of the present disclosure may have fewer components, other components not shown in the attached drawings, different components, components arranged differently or components connected differently, etc. Furthermore, two or more components in the drawings may be implemented in a single component, or a single component shown in the drawings may be implemented as a plurality of separate components.

Unless otherwise defined, technical terms or scientific terms used herein shall have their ordinary meanings as understood by those skilled in the field to which this disclosure belongs. The terms "first", "second" and similar terms used in the specification and claims of the patent application of this disclosure do not indicate any order, quantity or importance, but are only used to distinguish different components. When the number of components is not specified, the number of components can be one or more. Similarly, terms such as "a/an", "the" and "said" do not necessarily mean quantity limitation. Similar terms such as "including" or "comprising" mean that the elements or objects appearing before the terms cover the elements or objects listed after the terms and their equivalents, without excluding other elements or objects. Similar terms such as "installation", "setting", "connection" or "matching" are not limited to physical or mechanical installation, setting and connection, but can include electrical installation, setting and connection, whether directly or indirectly. "Up", "down", "left" and "right" are only used to indicate the relative orientation relationship when the equipment is used or the orientation relationship shown in the attached drawings. When the absolute position of the described object changes, the relative orientation relationship may also change accordingly.

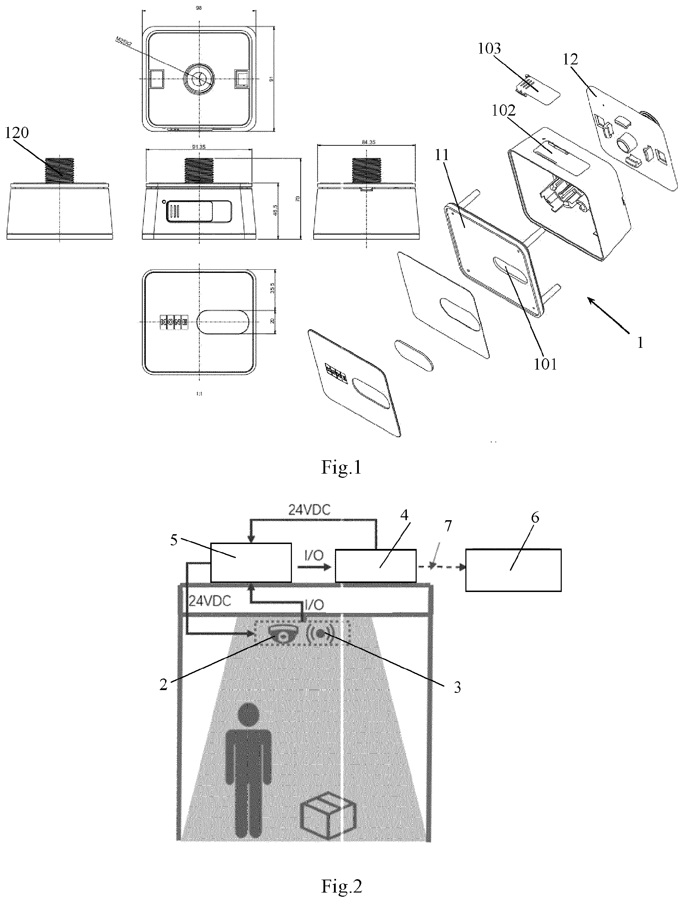

Referring to Figs. 1 and 2, the present disclosure proposes a sensing device for sensing a fill level of a space, wherein Fig. 1 is an exploded view of the sensing device according to a preferred embodiment of the present disclosure, and Fig. 2 is a schematic diagram of a typical application of the sensing device according to a preferred embodiment of the present disclosure.

The sensing device mainly comprises: a housing 1; a circuit board (not specifically shown) provided in the housing 1; a camera 2 provided on the circuit board; a distance measuring sensor 3 provided on the circuit board; a controller (not shown in detail), provided on the circuit board and in communication connection with the camera and the distance measuring sensor. The camera and the distance measuring sensor are arranged to be exposed to the space, for example, they can be exposed through a same opening (such as the first opening 101 described later), or they can be exposed through different openings, so that the lens of the camera and the sensing means of the distance measuring sensor can obtain relevant images and signals (as described later) through the opening and input the same to the controller, to perform a calculation of the fill level of the space.

It should be understood that the camera and the distance measuring sensor can be connected with the circuit board in various flexible ways (including physical connection and electrical connection); for example, they can be directly installed on the circuit board, or on separate or shared brackets provided respecitively for the camera and the distance measuring sensor, and then connected with the circuit board and its controller through wires. The distance measuring sensor may be, for example, a typical TOF sensor based on laser, microwave, etc., or any other suitable type of distance measuring sensor, which is mainly used to measure the distance between the object in the space and the sensing device.

Further preferably, the housing 1 further includes a first cover plate 11, which includes a first opening 101 through which the camera and the distance measuring sensor can be arranged to be exposed to the space. Furthermore, for the purposes of aesthetics and protection, the first cover plate 11 may be provided with a film covering, a transparent material covering, a protective layer, etc., which will not be described in detail here.

Further preferably, the housing 1 also includes a second cover plate 12, which is arranged opposite to the first cover plate and has a hollow threaded pipe 120 extending to the outside of the housing. The hollow threaded pipe 120, for example, may be used for screwing into a corresponding threaded hole in the ceiling of the space so as to fix the sensing device. Moreover, cables of various means inside the sensing device can be led out through the hollow threaded pipe to obtain power or transmit signals.

Further preferably, the sensing device also comprises a fill level adjustment switch (not specifically shown) which is arranged to be exposed through a second opening 102 on the housing 1, and the fill level adjustment switch is communicatively connected with the controller. Preferably, the second opening 102 may be arranged on a side wall of the housing 1 (as shown in the figure) or on the first cover plate, as long as it is convenient for operators' access. Further preferably, the sensing device may include a sliding cover 103 to slidably cover or open the second opening 102.

The fill level adjustment switch can be any suitable input device, such as a knob, a dial switch and the like, which is suitable for setting an alarm threshold for the fill level (for example, 70% or 80% of the full-loading level) and inputting the alarm threshold to the controller, so that the controller can calculate the current fill level through the method of the present disclosure (described in detail later) and compare the same with the alarm threshold, and when the alarm threshold is exceeded, an alarm indicating that the space is fully loaded can be sent out. It should be understood that the controller can be any suitable computing device, such as an MCU or the like.

A typical application of the sensing device according to the present disclosure is to sense the fill level in an elevator car. Therefore, the present disclosure also provides an elevator, which comprises the sensing device mentioned above for sensing the fill level of the elevator car space.

When applying the sensing device, the sensing device can be centrally installed on the ceiling of the elevator car, so that the camera 2 and the distance measuring sensor 3 face the ground of the elevator car, thereby obtaining the image of the car ground and measuring the distance from the objects in the car.

Preferably, the elevator can also include an elevator car control box 4, which is not only used to control various behaviors and equipment of the elevator, but also used to receive the sensing signals from the sensing device, and then send the sensing signals to an elevator control cabinet 6 or other data centers through wireless or wire transmission 7. The elevator car control box 4 can also supply power to the sensing device.

In addition, in the case that an elevator car control box of a certain elevator is not suitable for directly receiving sensing signals, a sensing device control box 5 can be additionally provided, which includes a power supply for supplying power to the sensing device (this power supply can also obtain power from the elevator car control box 4) and a means for receiving and forwarding the sensing signals from the sensing device to the elevator car control box 4 (such as any suitable data receiving/forwarding means, etc.).

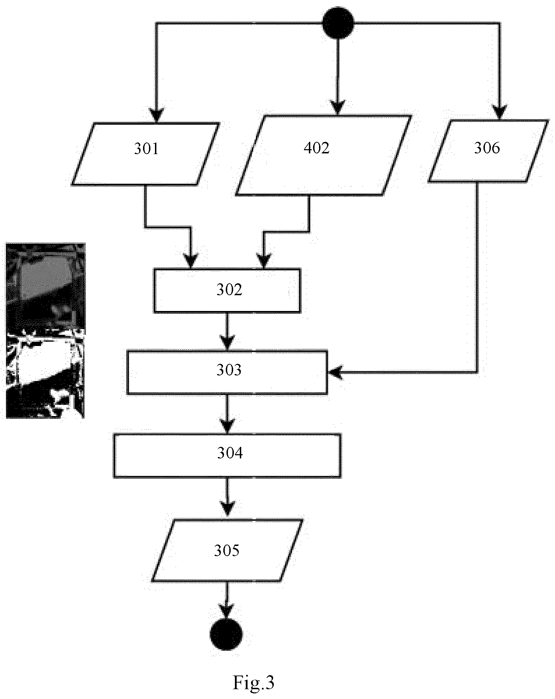

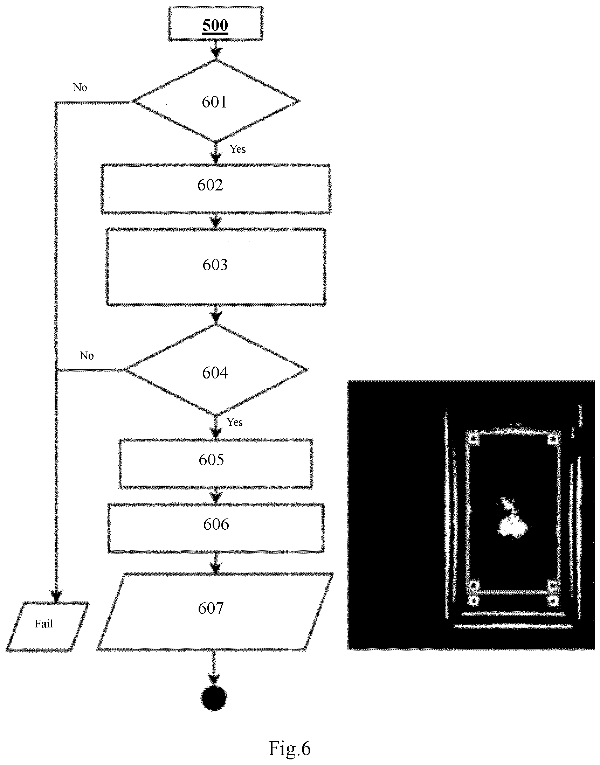

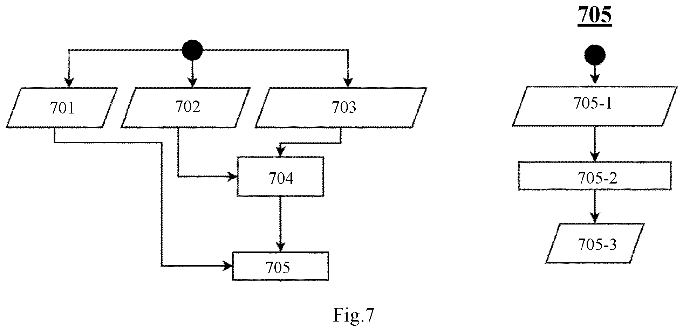

With reference to Figs. 3-8, a method for sensing the fill level of a space (especially the elevator car space) according to the present invention will be described below, which mainly comprises:
Step S1, obtaining a real-time ground image of the current space (301);
   the real-time ground image contains all objects in the current space, so that the method of the present disclosure can determine the fill level according to these real-time ground image.
Step S2, comparing the real-time ground image with a ground reference image, and calculating an image difference between the real-time ground image and the ground reference image (302); it should be understood that the ground reference image is an image of an "empty" ground obtained when there is no object on the ground, which can be obtained by any suitable method, for example, any suitable picture can be taken for the space, and then stored as a ground reference image after appropriate processing. And the ground reference image can be called or input to the controller (402) of the sensing device at the same time as the real-time ground image is input. Herein after, the present disclosure provides a preferred method for initializing the ground reference image.
Step S3: converting the image difference into a binary image (303), and calculating ratios of specified pixels (such as white pixels or black pixels) to all the ground pixels in the binary image (304).
Step S4: outputting the fill level of the space corresponding to the ratios (305). The output fill level of the space may be used to compare with the alarm threshold of the fill level as mentioned above, so that when the fill level of the space obtained by the above method exceeds the alarm threshold, the controller sends out an alarm signal or the like.

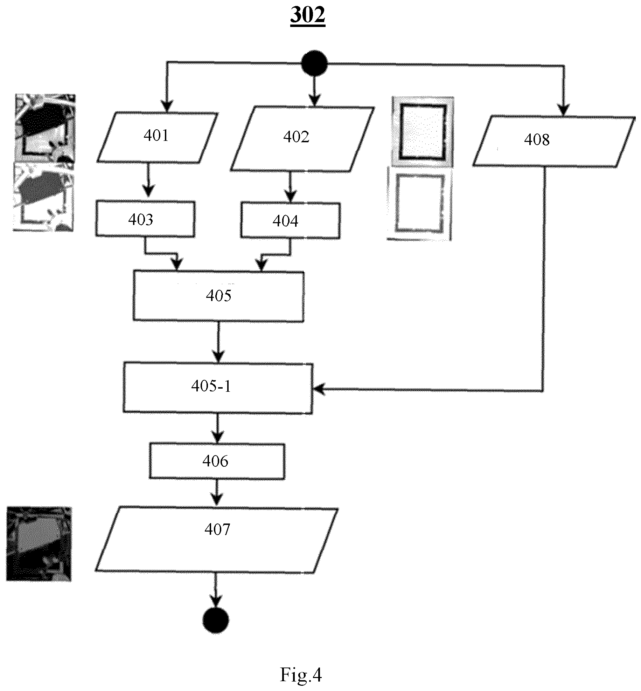

Further preferably, the method for obtaining the image difference is further optimized since the space, such as the elevator car, needs a faster and more accurate fill level determination and response. Specifically, referring to Fig. 4, the above step S2 (i.e., block 302) may further comprise:
after inputting the real-time ground image (401) and the ground reference image (402), performing YUV conversion (403) on the real-time ground image and YUV conversion (404) on the ground reference image, and calculating an absolute difference between the three YUV color channels of the real-time ground image and the ground reference image (405);
subsequently, the absolute difference of the three color channels being integrated into an absolute difference of a single channel (406) to output the absolute difference of the single channel as the image difference (407).

The present disclosure preferably make the image subjected to YUV conversion as described above, so that a faster image processing response and a real-time determination of the fill level can be realized.

In addition, in order to make the processing result of the color channels more reasonable and accurate, step S2 may further comprise:
applying a color channel weight to each color channel (408) to process the absolute difference between each color channel according to the color channel weight, to obtain a more reasonable absolute difference (405-1). For example, a color channel weight parameter may be input at the same time as the real-time ground image and the ground reference image are input. The color channel weight parameter may be obtained according to actual situation, historical experience or optimization algorithm, etc. According to the research of the inventors of this invention, the color channel weight parameter is set as: DIFF_CHANNEL_WEIGHTS = (0.2, 0.4, 0.4), and the absolute difference of each color channel may be specially optimized, so that the result is in line with the requirement and more accurate.

Referring back to Fig. 3, according to the present disclosure, step S3 may further comprise inputting a screening threshold (306), to further screen the binary image of the image difference obtained from step (302) (i.e. step S2) according to the screening threshold, so as to obtain a more accurate binary image of the image difference. The screening threshold can be obtained according to actual needs, historical experience or optimization algorithm etc.

In addition, according to the present disclosure, step S3 further comprises: obtaining a distance between an object in the space and the distance measuring sensor from the distance measuring sensor installed at the top of the space; if the distance exceeds a predetermined distance range, step S4 will not be performed. For example, for an elevator car space, distance measurement result of TOF sensor may be obtained from the sensing device installed at the top of the elevator car as mentioned above. If the distance measurement result shows that the object in the elevator car is too close to the sensing device (for example, less than 10cm), it indicates that the field of vision of the sensing device may have been blocked by the object (for example, the object may be an umbrella held by an occupant). At this time, the so-called ground image obtained from the camera will not indicate the true loading status on the ground, and even if the fill level is calculated, it has no practical significance, so the output of the fill level calculation result can be stopped. On the other hand, if the distance measurement results show that the object is very close to the ground (for example, less than 20cm), it indicates that the object may be an object such as a thin plate placed flat on the ground. Although it may occupy most of the ground, it may not prevent the elevator from further loading other objects, so the output of the fill level calculation results may also be stopped.

As mentioned above, the ground reference image can be obtained by various methods, and the present disclosure provides an optimized initialization method for the ground reference image.

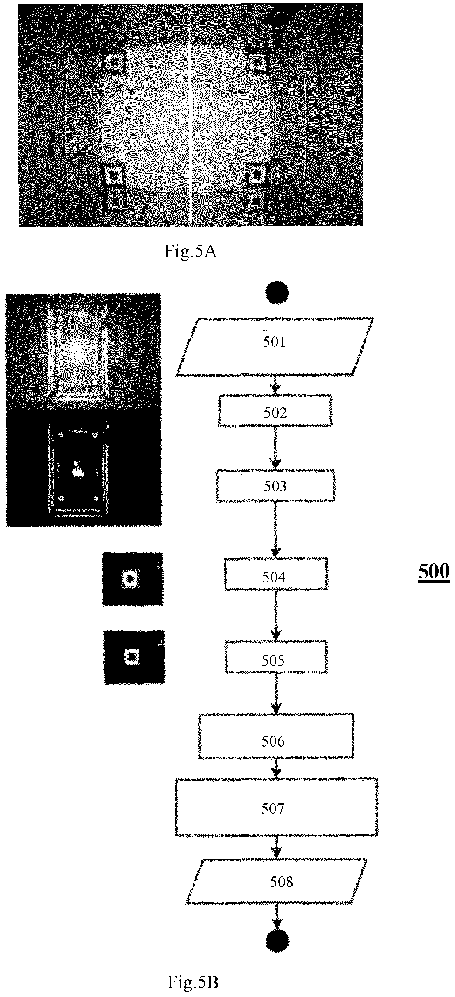

Specifically, referring to figs. 5A-5B, the initialization process for the ground reference image according to the invention comprises:
Step step 11: setting markers at a plurality of characteristic positions on the ground (501). For example, if the elevator car has a rectangular ground shape, square blocks can be set at four corners (i.e. rectangular characteristic positions) of the rectangular ground, and each square block includes a black frame at the periphery, a black square in the center, and a white frame between the black frame and the black square, as shown in Fig. 5A. Of course, if the ground has another shape, suitable markers may be set at characteristic positions of this special shape.

Subsequently, images of the markers are obtained (for example, through the camera of the sensing device as mentioned above), and qualified markers that meet a criteria are screened out and identified. The "criteria " herein is set according to actual needs, processing needs and/or historical experience, so as to process and screen out the images of the markers to identify the correct marker images. For example, for the markers shown in fig. 5A, images of square blocks can be obtained, and an image, that conforms with the positional relationship and the specified ratio between the black frame and the white frame, can be screened out from the images of the square blocks to identify each marker. This may specifically include: converting the image into a grayscale image (502), setting an appropriate threshold for preliminary screening (503), finding out the white frame (504), finding out the black frame (505), finding out the black frame within the white frame (506), selecting a frame with the correct ratio between the black frame and the white frame (507), and outputting the selected marker (508). Through this process, the influence of the virtual image of the markers caused by reflection on the side walls of the car can be eliminated, and the incorrect markers can be excluded, but to identify and keep the correct markers.

Step I2: processing the identified markers to obtain a binary ground mask and a ground mask contour that conforms with the actual shape of the ground. This may comprise, for example:
determining whether the identified markers meet the specified quantity (601), if yes, then proceed to the next step, otherwise, determine that the initialization is failed; for example, for the rectangular ground of the elevator car in the above example, the quantity of the identified markers should be at least 4;
using the identified markers to generate a shape conforming with the ground (602); for the ground of the elevator car, rectangle is the shape best conforming with the ground, so the four identified markers should be used as corners to generate rectangular ground contours;
removing the unqualified shape that does not meet the criteria, for example, for the rectangle generated previously, such generated rectangular ground contours can be screened at least according to aspect ratio, flatness and/or distance from the geometric center of the shape, so as to reserve the qualified rectangular ground contours that meet the criteria (603);
determining whether there are qualified rectangular ground contours being reserved (604). If yes, then proceed to the next step, otherwise, it is determined that the initialization is failed;
further screening the reserved rectangular ground contours based on the size and proximity to the image center (605);
selecting an optimal ground contour as the ground mask contour for the elevator car (606);
outputting a binary ground mask and the ground mask contour conforming with the actual shape of the ground (607).

Step step I3: obtaining a ground verification image, and obtaining a corrected ground mask image in accordance with the binary ground mask and the ground mask contour, which may include, for example:
inputting the binary ground mask (701), inputting the ground verification image (702, for example, obtained by the camera of the sensing device), and inputting the ground mask contour conforming with the actual shape of the ground as mentioned above (703);
as a preferred step, correcting the input images to reduce the size (704);
correcting the ground verification image according to ground mask contour (705-1),
performing a logical AND operation on the corrected ground verification image and the binary ground mask (705-2);
obtaining and outputting the corrected ground mask image (705-3).

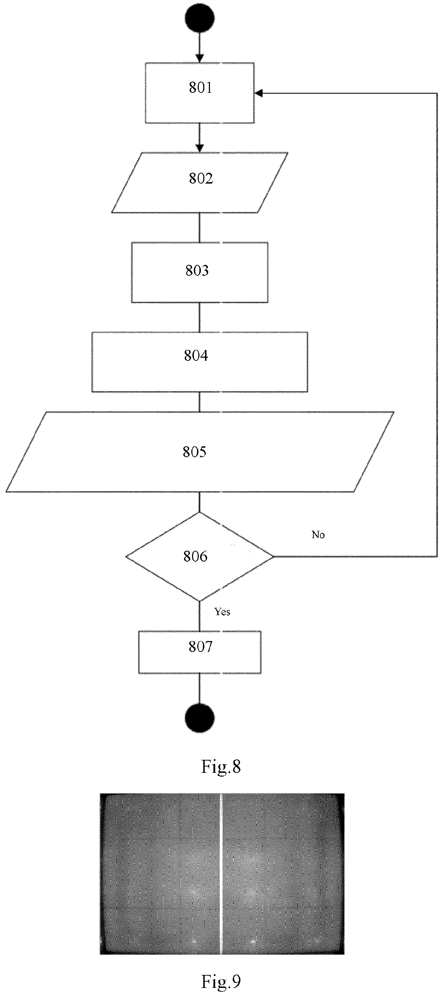

Step I4: obtaining a ground image without markers, and correcting the ground image without markers according to the corrected ground mask image to obtain a ground reference image. This may include, for example:
obtaining a ground image without markers (801), for example, including obtaining multiple groups of current ground images without makers, each group containing a plurality of current ground images without makers (for example, 20 images in each group, and a total of 2 groups), and setting an image cache according to the number of groups and the number of images in each group;
inputting the current ground images (802);
correcting each current ground image without makers according to the corrected ground mask image, and converting the corrected current ground image into a binary image (803);
preferably, inputting such converted binary images input to corresponding image caches, and old images in the cache being replaced with new images (804);
averaging all the binary images to obtain an average value, and screening out a binary image having the smallest image difference according to the average value (805);
determining whether all the image caches are full (806). If yes, proceed to the next step, otherwise, return to block (801);
taking the corrected current ground image corresponding to the binary image having the smallest image difference as the ground reference image (807), such generated ground reference image being shown **in** Fig. 9.

**It** should be understood that the above method can be stored **in** the sensing device controller as mentioned above by programming or other methods and executed by the controller. The ground reference image can be obtained when the sensing device is initialized, so as to be used **in** subsequent real-time fill level determination; or the ground reference image is updated according to the above method when necessary.

To sum up, the present disclosure provides a method for determining the fill level of a space like an elevator car without utilizing the gravity load, and the method can better identify the objects in the space and further calculate the fill level of the space according to the identified images, and can be used as a substitute or a beneficial supplement for gravity load determination.

The exemplary implementation of the present disclosure has been described in detail above with reference to the preferable embodiments. However, it can be understood by those skilled in the art that without departing from the scope of the appended claims, various changes and modifications can be made to the above specific embodiments, and various technical features and structures provided in this disclosure can be combined in various ways without going beyond the protection scope of the present disclosure, which is determined by the appended claims.

## Claims

1. A method for sensing a fill level of a space, comprising:
step S1, obtaining a real-time ground image of the current space (301) through a camera (2);
**characterized by**
step S2, comparing the real-time ground image with a ground reference image, and calculating the image difference between the real-time ground image and the ground reference image (302);
step S3, converting the image difference into a binary image, and calculating ratios of specified pixels to all ground pixels in the binary image (303);
step S4, outputting a fill level of the space corresponding to the ratios (305);
the method further comprising an initialization process for the ground reference image, comprising:
step I1, setting markers at a plurality of characteristic positions on the ground (501), obtaining images of the markers, and screening out and identifying qualified markers that meet a criteria;
step I2: processing the identified markers to obtain a binary ground mask and a ground mask contour that conforms with the actual shape of the ground;
step I3, obtaining a ground verification image, and obtaining a corrected ground mask image in accordance with the binary ground mask and the ground mask contour;
step I4: obtaining a ground image without markers, and correcting the ground image without markers according to the corrected ground mask image, to obtain a ground reference image.

2. The method of claim 1, wherein the ground has a rectangular shape, and the step I1 further comprises:
setting square blocks on the characteristic positions at four corners of the rectangular ground, wherein each square block comprises a black frame at the peripheral, a black square in the center, and a white frame between the black frame and the black square;
obtaining the images of the square blocks, and screening out, from the images of the square blocks, an image that conforms with the positional relationship and the specified ratio between the black frame and the white frame, so as to identify each marker.

3. The method of claim 2, wherein said processing the identified marks in step I2 further comprises:
generating rectangular ground contours by taking the identified markers as corners;
screening the rectangular ground contours, to reserve the qualified rectangular ground contours that meet the criteria, at least according to aspect ratio, flatness and/or distance from the geometric center of the shape;
further screening the reserved rectangular ground contours based on the size and proximity to the image center;
selecting an optimal ground contour as the ground mask contour.

4. The method of claim 3, wherein the step I3 further comprises:
correcting the ground verification image according to the ground mask contour;
performing logical AND operation on the corrected ground verification image and the binary ground mask, to obtain and output the corrected ground mask image.

5. The method of claim 4, wherein the step I4 further comprises:
obtaining multiple groups of current ground images without makers, wherein each group contains a plurality of current ground images without makers;
correcting each current ground images without makers according to the corrected ground mask image, and converting the corrected current ground image into a binary image;
averaging all the binary images to obtain an average value, and screening out a binary image having the smallest image difference according to the average value;
taking the corrected current ground image corresponding to the binary image having the smallest image difference as the ground reference image.

6. The method of claim 1, wherein the step S2 further comprises:
performing YUV conversion on the real-time ground image and the ground reference image, and calculating an absolute difference between the three YUV color channels of the real-time ground image and the ground reference image;
integrating the absolute difference of the three color channels into an absolute difference of a single channel, to output the absolute difference of the single channel as the image difference.

7. The method of claim 6, wherein the step S2 further comprises:
applying a color channel weight to each color channel to process the absolute difference between each color channel according to the color channel weight, so as to obtain more a reasonable absolute difference.

8. The method of claim 1, wherein the step S3 further comprises:
inputting a screening threshold to further screen the binary image according to the screening threshold; or
obtaining the distance between an object in the space and a distance measuring sensor from a distance measuring sensor installed at the top of the space; if the distance exceeds the predetermined distance range, step S4 will not be performed.

## Patentansprüche

1. Verfahren zur Erfassung eines Füllstandes eines Raums, umfassend:
Schritt S1, Erhalten eines Echtzeit-Bodenbildes des aktuellen Raums (301) mittels einer Kamera (2);
**gekennzeichnet durch**
Schritt S2, Vergleichen des Echtzeit-Bodenbildes mit einem Boden-Referenzbild, und Berechnen der Bilddifferenz zwischen dem Echtzeit-Bodenbild und dem Boden-Referenzbild (302);
Schritt S3, Umwandeln der Bilddifferenz in ein Binärbild, und Berechnen von Verhältnissen bestimmter Pixel zu allen Bodenpixeln in dem Binärbild (303);
Schritt S4, Ausgeben eines Füllstandes des Raums entsprechend den Verhältnissen (305);
wobei das Verfahren weiter einen Initialisierungsprozess für das Boden-Referenzbild umfasst, umfassend:
Schritt 11, Setzen von Markern an einer Vielzahl charakteristischer Positionen auf dem Boden (501),
Erhalten von Bildern der Marker, und Herausfiltern und Identifizieren qualifizierter Marker, die ein Kriterium erfüllen;
Schritt 12: Verarbeiten der identifizierten Marker, um eine binäre Bodenmaske und eine Bodenmaskenkontur zu erhalten, die mit der tatsächlichen Form des Bodens übereinstimmt;
Schritt 13, Erhalten eines Boden-Verifikationsbildes, und Erhalten eines korrigierten Bodenmaskenbildes in Übereinstimmung mit der binären Bodenmaske und der Bodenmaskenkontur;
Schritt 14: Erhalten eines Bodenbildes ohne Marker, und Korrigieren des Bodenbildes ohne Marker nach dem korrigierten Bodenmaskenbild, um ein Boden-Referenzbild zu erhalten.

2. Verfahren nach Anspruch 1, wobei der Boden eine rechteckige Form aufweist, und Schritt I1 weiter Folgendes umfasst:
Setzen quadratischer Blöcke an den charakteristischen Positionen an vier Ecken des rechteckigen Bodens, wobei jeder quadratische Block einen schwarzen Rahmen am Rand, ein schwarzes Quadrat in der Mitte, und einen weißen Rahmen zwischen dem schwarzen Rahmen und dem schwarzen Quadrat umfasst;
Erhalten der Bilder der quadratischen Blöcke, und Herausfiltern, aus den Bildern der quadratischen Blöcke, eines Bildes, das der Lagebeziehung und dem vorgegebenen Verhältnis zwischen dem schwarzen Rahmen und dem weißen Rahmen entspricht, um jeden Marker zu identifizieren.

3. Verfahren nach Anspruch 2, wobei das Verarbeiten der identifizierten Marker in Schritt I2 weiter Folgendes umfasst:
Erzeugen rechteckiger Bodenkonturen, indem die identifizierten Marker als Ecken verwendet werden;
Herausfiltern der rechteckigen Bodenkonturen, um die qualifizierten rechteckigen Bodenkonturen zurückzubehalten, die die Kriterien erfüllen, zumindest nach Seitenverhältnis, Flachheit und/oder Abstand von der geometrischen Mitte der Form;
Weiteres Herausfiltern der zurückbehaltenen rechteckigen Bodenkonturen, basierend auf der Größe und der Nähe zum Bildzentrum;
Auswählen einer optimalen Bodenkontur als Bodenmaskenkontur.

4. Verfahren nach Anspruch 3, wobei Schritt 13 weiter Folgendes umfasst:
Korrigieren des Boden-Verifikationsbildes nach der Bodenmaskenkontur;
Durchführen einer logischen UND-Verknüpfung an dem korrigierten Boden-Verifikationsbild und der binären Bodenmaske, um das korrigierte Bodenmaskenbild zu erhalten und auszugeben.

5. Verfahren nach Anspruch 4, wobei Schritt 14 weiter Folgendes umfasst:
Erhalten mehrerer Gruppen aktueller Bodenbilder ohne Marker, wobei jede Gruppe eine Vielzahl aktueller Bodenbilder ohne Marker enthält;
Korrigieren jedes aktuellen Bodenbildes ohne Marker nach dem korrigierten Bodenmaskenbild, und Umwandeln des korrigierten aktuellen Bodenbildes in ein Binärbild;
Mitteln aller Binärbilder, um einen Mittelwert zu erhalten, und Herausfiltern eines Binärbildes, das die kleinste Bilddifferenz nach dem Mittelwert aufweist;
Verwenden des korrigierten aktuellen Bodenbildes, das dem Binärbild mit der kleinsten Bilddifferenz entspricht, als Boden-Referenzbild.

6. Verfahren nach Anspruch 1, wobei Schritt S2 weiter Folgendes umfasst:
Durchführen einer YUV-Umwandlung an dem Echtzeit-Bodenbild und dem Boden-Referenzbild, und Berechnen einer Betragsdifferenz zwischen den drei YUV-Farbkanälen des Echtzeit-Bodenbildes und des Boden-Referenzbildes;
Integrieren der Betragsdifferenz der drei Farbkanäle zu einer Betragsdifferenz eines einzelnen Kanals, um die Betragsdifferenz des einzelnen Kanals als die Bilddifferenz auszugeben.

7. Verfahren nach Anspruch 6, wobei Schritt S2 weiter Folgendes umfasst:
Anwenden eines Farbkanalgewichts auf jeden Farbkanal, um die Betragsdifferenz zwischen jedem Farbkanal nach dem Farbkanalgewicht zu verarbeiten, um eine vernünftigere Betragsdifferenz zu erhalten.

8. Verfahren nach Anspruch 1, wobei Schritt S3 weiter Folgendes umfasst:
Eingeben eines Herausfilter-Schwellenwertes, um das Binärbild nach dem Herausfilter-Schwellenwert weiter herauszufiltern; oder,
Erhalten des Abstands zwischen einem Objekt in dem Raum und einem Abstandssensor von einem an der Oberseite des Raums installierten Abstandssensor; wenn der Abstand den vorbestimmten Abstandsbereich überschreitet, wird Schritt S4 nicht durchgeführt.

## Revendications

1. Procédé de détection d'un niveau de remplissage d'un espace, comprenant :
une étape S1, consistant à obtenir une image du sol en temps réel de l'espace courant (301) à travers une caméra (2) ;
**caractérisé par**
une étape S2, consistant à comparer l'image du sol en temps réel à une image de référence du sol, et à calculer la différence d'images entre l'image du sol en temps réel et l'image de référence du sol (302) ;
une étape S3, consistant à convertir la différence d'images en une image binaire, et à calculer des rapports de pixels spécifiés à tous les pixels du sol dans l'image binaire (303) ;
une étape S4, consistant à délivrer en sortie un niveau de remplissage de l'espace correspondant aux rapports (305) ;
le procédé comprenant en outre un processus d'initialisation pour l'image de référence du sol, comprenant :
une étape I1, consistant à disposer des marqueurs au niveau d'une pluralité de positions caractéristiques sur le sol (501),
à obtenir des images des marqueurs, et à filtrer et à identifier des marqueurs qualifiés qui satisfont à un critère ;
une étape I2 : consistant à traiter les marqueurs identifiés pour obtenir un masque de sol binaire et un contour de masque de sol qui est conforme à la forme réelle du sol ;
une étape I3, consistant à obtenir une image de vérification du sol, et à obtenir une image de masque de sol corrigée conformément au masque de sol binaire et au contour de masque de sol ;
une étape I4 : consistant à obtenir une image du sol sans marqueurs, et à corriger l'image du sol sans marqueurs conformément à l'image de masque de sol corrigée, pour obtenir une image de référence du sol.

2. Procédé selon la revendication 1, dans lequel le sol présente une forme rectangulaire, et l'étape I1 comprend en outre :
disposer des blocs carrés sur les positions caractéristiques aux quatre coins du sol rectangulaire, dans lequel chaque bloc carré comprend un cadre noir à la périphérie, un carré noir au centre, et un cadre blanc entre le cadre noir et le carré noir ;
obtenir les images des blocs carrés, et filtrer, parmi les images des blocs carrés, une image qui est conforme à la relation de position et au rapport spécifié entre le cadre noir et le cadre blanc, de manière à identifier chaque marqueur.

3. Procédé selon la revendication 2, dans lequel ledit traitement des marqueurs identifiés à l'étape I2 comprend en outre :
générer des contours rectangulaires du sol en prenant les marqueurs identifiés comme coins ;
filtrer les contours rectangulaires du sol, afin de réserver les contours rectangulaires du sol qualifiés qui satisfont au critère, au moins en fonction d'un rapport d'aspect, d'une planéité et/ou d'une distance au centre géométrique de la forme ;
filtrer en outre les contours rectangulaires du sol réservés sur la base de la taille et de la proximité par rapport au centre de l'image ;
sélectionner un contour optimal du sol comme contour de masque de sol.

4. Procédé selon la revendication 3, dans lequel l'étape I3 comprend en outre :
corriger l'image de vérification du sol conformément au contour de masque de sol ;
effectuer une opération logique ET sur l'image de vérification du sol corrigée et le masque de sol binaire, afin d'obtenir et de délivrer en sortie l'image de masque de sol corrigée.

5. Procédé selon la revendication 4, dans lequel l'étape I4 comprend en outre :
obtenir plusieurs groupes d'images courantes du sol sans marqueurs, dans lequel chaque groupe contient une pluralité d'images courantes du sol sans marqueurs ;
corriger chaque image courante du sol sans marqueurs conformément à l'image de masque de sol corrigée, et convertir l'image courante du sol corrigée en une image binaire ;
moyenner toutes les images binaires pour obtenir une valeur moyenne, et filtrer une image binaire présentant la plus petite différence d'images en fonction de la valeur moyenne ;
prendre l'image courante du sol corrigée correspondant à l'image binaire présentant la plus petite différence d'images comme image de référence du sol.

6. Procédé selon la revendication 1, dans lequel l'étape S2 comprend en outre :
effectuer une conversion en YUV sur l'image du sol en temps réel et l'image de référence du sol, et calculer une différence absolue entre les trois canaux de couleur YUV de l'image du sol en temps réel et de l'image de référence du sol ;
intégrer la différence absolue des trois canaux de couleur en une différence absolue d'un unique canal, afin de délivrer en sortie la différence absolue de l'unique canal comme différence d'images.

7. Procédé selon la revendication 6, dans lequel l'étape S2 comprend en outre :
appliquer un poids de canal de couleur à chaque canal de couleur pour traiter la différence absolue entre chaque canal de couleur en fonction du poids de canal de couleur, de manière à obtenir une différence absolue plus raisonnable.

8. Procédé selon la revendication 1, dans lequel l'étape S3 comprend en outre :
entrer un seuil de filtrage pour filtrer en outre l'image binaire en fonction du seuil de filtrage ; ou
obtenir la distance entre un objet dans l'espace et un capteur de distance à partir d'un capteur de distance installé au sommet de l'espace ; si la distance dépasse la plage de distance prédéterminée, l'étape S4 ne sera pas effectuée.
